# EUROPÄISCHE PATENTSCHRIFT

(11) **EP 2 104 724 B1**
(45) Veröffentlichungstag und Bekanntmachung des Hinweises auf die Patenterteilung: **15.08.2012**
(21) Anmeldenummer: 07857720.2
(22) Anmeldetag: 17.12.2007
(51) Int. Cl.: C10G 33/06, C10G 33/08, C02F 1/40, B01D 17/02

(54) **VERFAHREN ZUR ABTRENNUNG EINER WASSERPHASE AUS EINER ÖLPHASE**
PROCESS FOR SEPARATING AN AQUEOUS PHASE FROM AN OIL PHASE
PROCÉDÉ DE SÉPARATION D'UNE PHASE AQUEUSE ET D'UNE PHASE HUILEUSE

(30) Priorität: 18.12.2006 DE 102006059714
(43) Veröffentlichungstag der Anmeldung: 30.09.2009
(73) Patentinhaber: MAHLE International GmbH, 70376 Stuttgart (DE)
(72) Erfinder: MICHAEL, Ralph, 20255 Hamburg (DE); RUNGE, Eberhard, 22455 Hamburg (DE)
(74) Vertreter: BRP Renaud & Partner
(86) Internationale Anmeldenummer: PCT/EP2007/064090
(87) Internationale Veröffentlichungsnummer: WO 2008/074786

(56) Entgegenhaltungen:
- EP-A- 0 955 076
- DE-A1- 10 241 518
- US-A- 3 813 851
- US-A- 4 643 834
- US-B1- 6 827 865

## Beschreibung

Die Erfindung betrifft ein Verfahren zur Abtrennung einer Wasserphase aus einer Ölphase eines Ölgemisches gemäß dem Oberbegriff des Anspruchs 1. Die Erfindung betrifft außerdem eine Vorrichtung zur Durchführung dieses Verfahrens gemäß dem Oberbegriff des Anspruchs 2.

Die Abtrennung von einer Wasserphase aus einer Ölphase, insbesondere aus Rohöl und Ölprodukten, kann im Prinzip entweder mittels physikalischer, chemischer oder aber thermischer Verfahren erfolgen. Die beiden letztgenannten Verfahren ziehen dabei häufig Sekundärkontaminationen in Form einer zusätzlichen Befrachtung des Abwassers mit Chemikalien nach sich. Demgegenüber benötigen thermische Verfahren große E-nergiemengen und gelten deshalb sowohl aus ökologischer als auch aus ökonomischer Sicht als nicht zeitgemäß. Dagegen stellen physikalische Verfahren eine umweltfreundliche Alternative dar, was insbesondere unter dem Aspekt zunehmend schärferer Umweltauflagen von Bedeutung ist.

Nachteilig bei diesen Verfahren ist jedoch, dass eine Leistung der Verfahren, das heißt eine Durchsatzmenge pro Zeit relativ gering ist, so dass für größere Mengen an zu trennenden Öl-Wasser-Gemischen erheblich Zeit benötigt wird.

Aus der EP 0 955 076 A1 ist ein Verfahren zur Abtrennung einer Wasserphase aus einer Ölphase eines Öl-Wasser-Gemisches bekannt, das sich in eine erste Stufe, in welcher eine turbulente Strömung erzeugt wird, und in eine zweite Stufe, in welcher eine laminare Strömung herrscht, gliedert. In einem dritten Schritt wird schließlich die Trennung der Öl- von der Wasserphase aufgrund der Dichteunterschiede durchgeführt.

Aus der US 6,827,865 B1 ist eine Vorrichtung zur Abtrennung einer Wasserphase aus einer Ölphase eines Öl-Wasser-Gemisches bekannt. Dabei weist die Vorrichtung mehrere hintereinander geschaltete Koaleszenzstufen auf, welche jedoch aufgrund des offensichtlich einheitlichen Querschnittprofiles jeweils gleich große Strömungsgeschwindigkeiten aufweisen.

Aus der US 4,643,834 A ist ebenfalls eine Vorrichtung zur Trennung einer Wasserphase aus einer Ölphase eines Öl-Wasser-Gemisches bekannt. Diese arbeitet ausschließlich mit einer laminaren Strömung, wobei aufgrund der Anordnung der einzelnen Trennelemente in diesen jeweils unterschiedliche Strömungsgeschwindigkeiten erreicht werden können.

Aus der US 3,813,851 A ist eine Vorrichtung zur Entfernung von Feststoffanteilen oder Tröpfchen aus einer Flüssigphase mittels Schwerkraft bekannt.

Aus der DE 102 41 518 A1 ist ein gattungsgemäßes Verfahren zur Abtrennung von einer diskontinuierlichen Nebenphase aus einer flüssigen Hauptphase bekannt, wobei in einem ersten Schritt Wassertropfen einer vorgegebenen kontrollierten Größe gebildet werden, die dann in einem zweiten Schritt auf eine Mehrphasen-Trennprofileinheit geleitet, auf dieser koaleszieren in eine Sinkbahn gelenkt und abgeschieden werden. Das koaleszierte und abgeschiedene Wasser wird in einem Wassersack gesammelt und von dort abgezogen. Zur weiteren Verfeinerung der Abtrennung können beispielsweise eine mechanische Emulsionsbrecher-Stufe sowie eine oder mehrere wasserabweisende Membranen nachgeschaltet werden.

Die Erfindung beschäftigt sich mit dem Problem, für ein Verfahren der gattungsgemäßen Art eine verbesserte Ausführungsform anzugeben, mit welcher sich auch große Mengen an Wasser aus ebenfalls großen Mengen Öl schnell und einfach und insbesondere kontinuierlich trennen lassen.

Dieses Problem wird erfindungsgemäß durch den Gegenstand der unabhängigen Ansprüche gelöst. Vorteilhafte Ausführungsformen sind Gegenstand der abhängigen Unteransprüche.

Die Erfindung beruht auf dem allgemeinen Gedanken, zur Abtrennung einer Wasserphase aus einer Ölphase eines Öl-Wasser-Gemisches ein mehrstufig arbeitendes Druckentwässerungssystem mit Mehrpasen-Trennprofilen einzusetzen, welches die im Öl-Wasser-Gemisch vorhandenen Wasseranteile schrittweise in mehreren Stufen abtrennt. Dabei sind in einer ersten Stufe in einem ersten Strömungsgenerator die Trennprofile als Phasen-Trennelemente ausgebildet und so angeordnet, dass in dem diese durchströmenden Öl-Wasser-Gemisch Turbulenzen erzeugt werden, welche ein Ablagern von Wasser auf den Trennprofilen begünstigen. Die als Phasen-Trennelemente ausgebildeten Trennprofile weisen dabei vorzugsweise eine hydrophile Beschichtung auf oder sind aus einem hydrophilen Material hergestellt, wodurch das in dem Öl-Wasser-Gemisch vorhandene Wasser von den Trennprofilen angezogen und dort abgelagert werden kann. Durch das Erzeugen von Turbulenzen treffen sich die im Öl-Wasser-Gemisch befindlichen Wassertropfen, welche an den hydrophilen Trennprofilen abgelagert und abgetrennt werden können. Gleichzeitig bewirken die Turbulenzen in der Strömung ein Aufbrechen von sogenannten Wassernestern, welche einen Abtrennvorgang verbessern. Auf der Oberseite beziehungsweise der Anströmseite der Trennprofile bildet sich ein Wasserfilm, welcher zusätzlich hydrophil wirkt. In der ersten Stufe wird das Öl-Wasser-Gemisch an den Trennprofilen zunächst durch eine um α ≈ 50 bis 60° gegen die Horizontale geneigte Anströmfläche nach oben umgelenkt und strömt anschließend über eine zwischen der Anströmfläche und einer Abströmfläche gelegene und im Wesentlichen horizontal verlaufende Verbindungsfläche, wobei es schließlich an den Trennprofilen durch
eine um β ≈ 30 bis 35° gegen die Horizontale geneigte Abströmfläche (24) nach unten abgelenkt wird.

Durch die als Laminar-Phasen-Trennelemente ausgebildeten Trennprofile des zweiten Strömungsgenerators in der zweiten Stufe wird eine laminare, das heißt eine beruhigte Strömung des Öl-Wasser-Gemisches erzeugt, wodurch größere Tropfen an den ebenfalls hydrophil ausgebildeten Trennprofilen abgelagert werden können. In dem zweiten Strömungsgenerator herrscht dabei eine deutlich geringere Strömungsgeschwindigkeit als in der ersten Stufe, da der Strömungsquerschnitt, insbesondere ein Abstand zwischen den Laminar-Phasen-Trennelementen im Vergleich zur ersten Stufe größer ist. In der zweiten Stufe wird das Öl-Wasser-Gemisch an den Trennprofilen zunächst durch eine um α' ≈ 30 bis 35° gegen die Horizontale geneigte Anströmfläche nach oben umgelenkt und strömt anschließend über eine zwischen der Anströmfläche und einer Abströmfläche gelegene und im Wesentlichen horizontal verlaufende Verbindungsfläche. Schließlich wird es an den Trennprofilen durch eine um β' ≈ 30 bis 35° gegen die Horizontale geneigte Abströmfläche nach unten abgelenkt wird.

In einem dritten Strömungsgenerator einer dritten Stufe sind als mechanische Phasenseparatoren ausgebildete Trennprofile vorgesehen, welche in der Lage sind, auch kleinste noch im Öl-Wasser-Gemisch verteilte Wasseranteile in Form von kleinsten Tröpfchen, abzuscheiden. Dabei sind auch die Trennprofile der dritten Stufe hydrophil ausgebildet, so dass die noch im Öl-Wasser-Gemisch verbliebenen Wasseranteile koalesziert und abgeschieden werden können. Durch die erfindungsgemäße Lösung ist es somit möglich, auch größere Mengen eines Öl-Wasser-Gemisches in seine Ölanteile und seine Wasseranteile aufzuspalten und das Wasser aus der Ölphase abzutrennen. Dies ist insbesondere für moderne Raffinerievorgänge von entscheidender Bedeutung, da bei diesen dem Rohöl zur Qualitätsverbesserung in einem späteren Prozess zunächst größere Wassermengen zugegeben werden. Diese nicht unerheblichen Wassermengen von bis zu 20%, sind für den Veredelungsprozess unabdingbar, sollen jedoch nach der Veredelung aus dem Öl-Wasser-Gemisch wieder entfernt werden. Herkömmliche Verfahren, welche nahezu ausschließlich auf einem Abscheiden des Wassers aufgrund von Gravitation beruhen, stoßen dabei schnell an die Grenzen ihrer Leistungsfähigkeit und sind für große Mengen gänzlich ungeeignet. Mit dem erfindungsgemäßen Verfahren ist es jedoch möglich, auch zuvor zur Veredelung zugesetzte große Wassermengen wieder schnell und einfach zu entfernen, wodurch sich das Veredelungsverfahren deutlich ökonomischer durchführen lässt. In der dritten Stufe wird das Öl-Wasser-Gemisch an den Trennprofilen zunächst durch eine um α" ≈ 30 bis 35° gegen die Horizontale geneigte Anströmfläche nach oben umgelenkt und strömt anschließend über eine zwischen der Anströmfläche und einer Abströmfläche gelegene und im Wesentlichen horizontal verlaufende Verbindungsfläche, um schließlich an den Trennprofilen durch eine um β" ≈ 30 bis 35° gegen die Horizontale geneigte Abströmfläche nach unten abgelenkt zu werden. Im Längsschnitt gesehen ist zwischen den einzelnen Trennprofilen ein vertikaler

Abstand h₁ von ca. 10-20 mm vorgesehen, wobei im Längsschnitt gesehen ein vertikaler Abstand h₂ zwischen den einzelnen Trennprofilen des zweiten Strömungsgenerators größer ist als bei den Trennprofilen des ersten Strömungsgenerators. Ein vertikaler Abstand h₃ zwischen den einzelnen Trennprofilen des dritten Strömungsgenerators ist kleiner als bei den Trennprofilen des ersten Strömungsgenerators.

Die Erfindung beruht außerdem auf dem allgemeinen Gedanken, zur Durchführung des im vorigen Absatz beschriebenen Verfahrens eine Vorrichtung einzusetzen, welche zumindest ein Druckentwässerungssystem mit Mehrphasen-Trennprofilen aufweist, wobei letztere aus einem hydrophilen Material ausgebildet sind und/oder eine hydrophile Beschichtung aufweisen. Eine derartige hydrophile Beschichtung beziehungsweise ein solches hydrophiles Material kann beispielsweise Stahl, insbesondere polierter Edelstahl und/oder Kunststoff sein. Stahl und Kunststoff besitzen dabei hydrophile Oberflächen, welche beim Betrieb der erfindungsgemäßen Vorrichtung stets von einem Wasserfilm bedeckt sind. Hydrophile Oberflächen haben dabei gegenüber Wasser einen Kontaktwinkel, welcher kleiner als 90° ist. Sowohl Stahl als auch Kunststoffe sind robuste Werkstoffe, welche einen zuverlässigen Betrieb und eine lange Lebensdauer der erfindungsgemäßen Vorrichtung gewährleisten können.

Vorteilhafte, näher erläuterte Ausführungsbeispiele sind in den Zeichnungen jeweils schematisch dargestellt.

### Dabei zeigen

- Fig. 1: eine Prinzipdarstellung einer Anlage mit einer Vorrichtung zur Durchführung des Verfahrens zur Entwässerung von Ölen,
- Fig. 2: einen detaillierten Aufbau der erfindungsgemäßen Vorrichtung zur Durchführung des Verfahrens gemäß Fig. 1,
- Fig. 3: eine Detailansicht möglicher Trennprofile eines Druckentwässerungssystems der erfindungsgemäßen Vorrichtung.

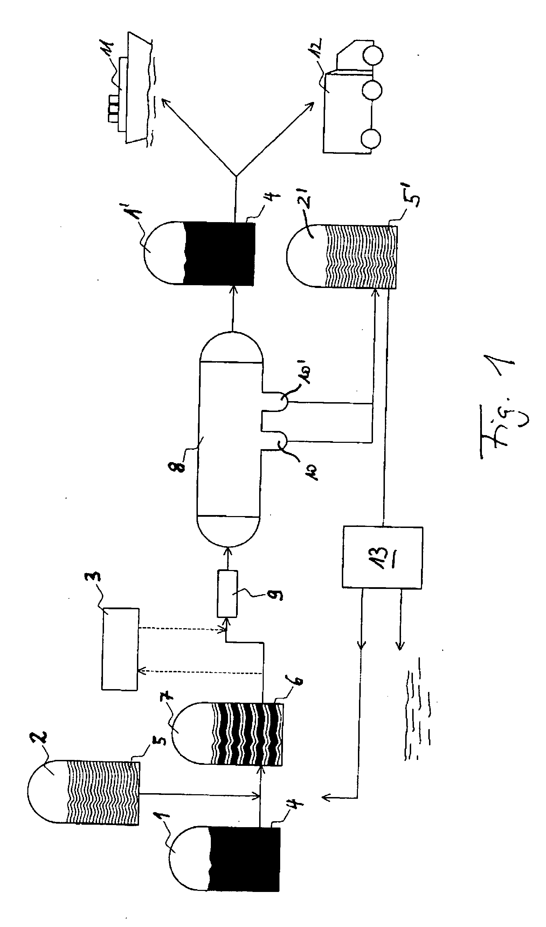

Gemäß Fig. 1 steht zu Beginn des erfindungsgemäßen Verfahrens Öl 4, welches in einem Öltank 1 gelagert ist und Wasser 5, welches in einem Wassertank 2 gelagert ist. Zur Verbesserung der Qualität des Öls 4 wird dieses einer Einrichtung 3, insbesondere einer Veredelungseinrichtung 3, zugeführt, in welchem es veredelt wird. Da der Veredelungsprozess einen nicht unerheblichen Anteil an Wasser 5 im Öl 4 verlangt, wird zunächst Wasser 5 aus dem Wassertank 2 dem Öl 4 aus dem Öltank 1 zugemischt, so dass ein Öl-Wasser-Gemisch 6 entsteht, welches in einem hierfür vorgesehenen Tank 7 zwischengelagert wird. Von dem Tank 7 ausgehend gelangt das Öl-Wasser-Gemisch 6 über die Veredelungseinrichtung 3, in welcher es veredelt wird, zu einer Vorrichtung 8, in welcher die Wasseranteile wieder aus dem Öl-Wasser-Gemisch entfernt werden. Dabei gelangt das Öl-Wasser-Gemisch 6 zunächst in eine spezielle Mischeinheit 9, in welcher ein Wassertropfenspektrum, kurz auch als Controlled-Water-Drop (CWD) genannt, erzeugt wird. Dieses für die Abtrennung des Wassers 5 aus dem Öl 4 erforderliche Wassertropfenspektrum ist für eine optimale Wasserabscheidung in der nachfolgenden Vorrichtung 8 unerlässlich. Die Vorrichtung 8 kann dabei je nach Anwendung einen Durchmesser von mehreren Metern erreichen und eine kontinuierliche Wasserabscheidung bewirken, welche so groß ist, dass sie eine übliche Prozessgeschwindigkeit nicht behindert. In der erfindungsgemäßen Vorrichtung 8 sinkt das abgeschiedene Wasser in vorher genau definierten Flugbahnen ab und sammelt sich in hierfür vorgesehenen Wassersammelräumen 10, 10', aus welchen es einem weiteren Wassertank 2' zugeführt werden kann. Das von den Wasseranteilen vorzugsweise gänzlich gereinigte Öl 4 gelangt in einen weiteren Öltank 1' und wird von dort beispielsweise über den Seeweg 11 oder den Landweg 12 einer nicht gezeigten Raffinerie zugeführt. Das abgetrennte Wasser 5' kann beispielsweise in einem Entölungssystem 13 aufbereitet und entweder dem Prozess erneut zugeführt oder aber entsorgt werden.

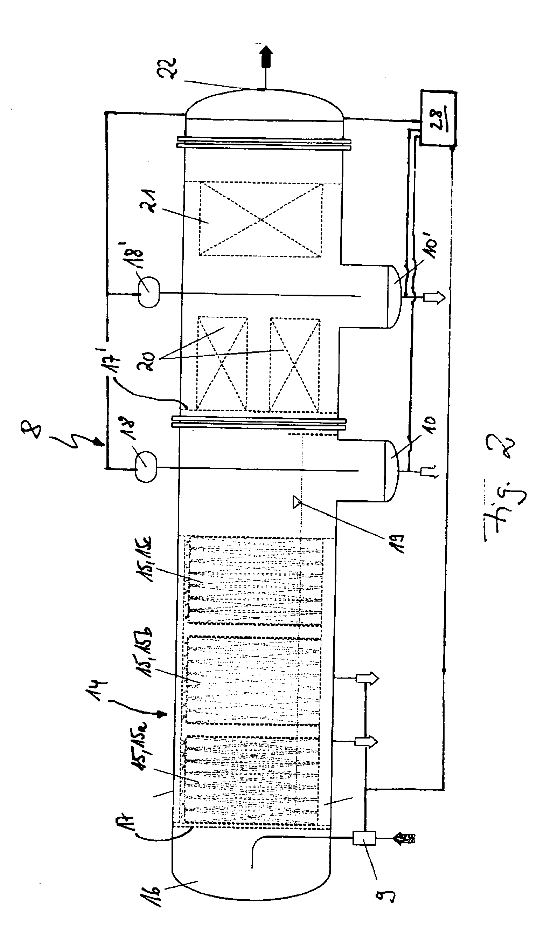

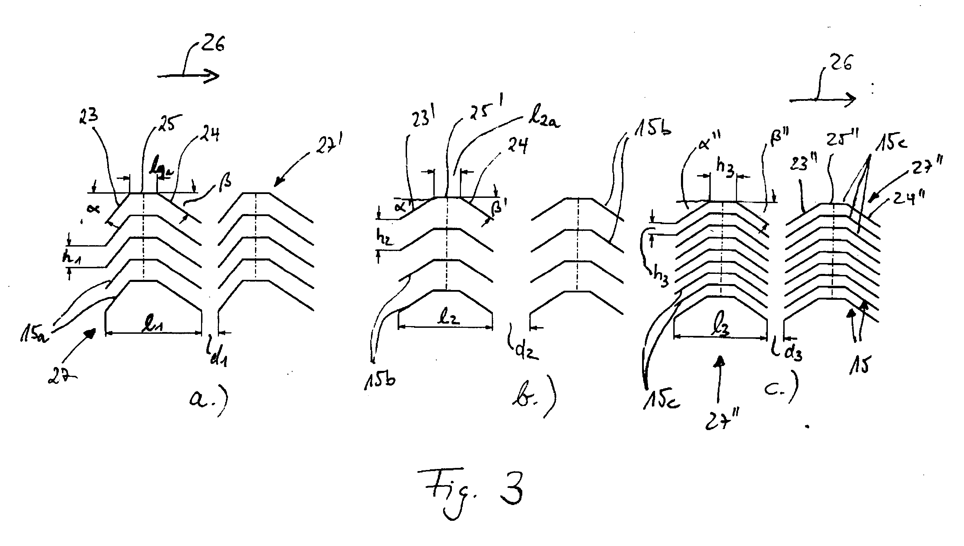

Die erfindungsgemäße Vorrichtung 8 zur Abtrennung der Wasserphase aus der Ölphase des Öl-Wasser-Gemisches 6 umfasst dabei zumindest ein Druckentwässerungssystem 14, welches schematisch in Fig. 2 und detailliert in Fig. 3 dargestellt ist. Das Druckentwässerungssystem 14 weist dabei in hintereinander geschalteten Strömungsgeneratoren sogenannte Mehrphasen-Trennprofile 15 auf, welche aus einem hydrophilen Material ausgebildet sind und/oder eine hydrophile Beschichtung aufweisen. Eingangsseitig der Vorrichtung 8 ist, wie den Fig. 1 und 2 zu entnehmen ist, die Mischeinrichtung 9 angeordnet, in welcher kontrollierte, genau definierte Wassertropfen (CWD - Controlled-Water-Drops) erzeugt werden. Von dort gelangt das Öl-Wasser-Gemisch 6 in eine Vorkammer 16 des Druckentwässerungssystems 14, welche dabei eine Ruhezone bildet und einerseits eine gleichmäßige Verteilung des Öl-Wasser-Gemischstroms über den gesamten Querschnitt der Vorrichtung 8 bewirkt und andererseits einem Impulsabbau der eintretenden, turbulenten Strömung dient. Über eine Verteilungseinrichtung 17, insbesondere über ein Dispersionsverteilungssegment, wird das Öl-Wasser-Gemisch 6 auf eine erste Stufe des Druckentwässerungssystems 14, welches insgesamt drei Stufen aufweist, verteilt.

In dem Strömungsgenerator der ersten Stufe sind als Phasen-Trennelemente 15a ausgebildete Trennprofile 15 zur Spaltung des Öl-Wasser-Gemisches 6 in Wasser 5 einerseits und Öl 4 andererseits und zur Erzeugung einer turbulenten Strömung angeordnet. Stromab der als Phasen-Trennelemente 15a ausgebildeten Trennprofilen 15 ist in einem zweiten Strömungsgenerator eine zweite Stufe mit als Laminar-Phasen-Trennelemente 15b ausgebildeten Trennprofilen 15 vorgesehen, welche zur Erzeugung einer laminaren Strömung und zur Abscheidung von Wasser 5 aus dem Öl-Wasser-Gemisch 6 dient. Bereits die Trennprofile 15a fördern ein Koaleszieren der Wassertropfen durch ihre Beschaffenheit, insbesondere durch ihre hydrophile Oberfläche und der ihnen gegebenen Geometrie beziehungsweise Anordnung. In dem dritten Generator der darauf folgenden Stufe mit den als Laminar-Phasen-Trennelementen 15b ausgebildeten Trennprofilen 15 wird bei laminarer Strömung das Benetzungsverhalten beziehungsweise eine Affinität der Profile 15b zu Wasser 5 genutzt, um dadurch deren Tropfenbildung in den nachfolgenden Profilen 15, insbesondere den als mechanischen Phasen-Separatoren 15c ausgebildeten Trennprofilen 15 der dritten Stufe optimal nutzen zu können. Unter Berechnung der sich hier ergebenden Wassertropfengrößen, der Dichtedifferenz und der eingestellten Fließgeschwindigkeit wird über Sensoren 18 eine dem Öl-Wasser-Gemisch 6 spezifische Trennschichtlage 19 eingestellt, welche durch eine Ventilsteuerung, insbesondere eine automatische Ventilsteuerung, im Wassersammelraum 10 stabil gehalten wird. Das im Wassersammelraum 10 gesammelte Wasser kann proportional zum Produktionsprozess abgelassen werden.

Zur weiteren verbesserten Wasserabtrennung kann ein mechanischer Emulsionsbrecher 20 vorgesehen sein, welcher stromab der Trennprofile 15 angeordnet ist. Ein derartiger mechanischer Emulsionsbrecher 20 ist in der Lage, kleinste, im µm-Bereich befindliche Wassertropfen abzuscheiden. Darüber hinaus kann optional eine speziell auf den jeweiligen Anwendungsfall abgestimmte hydrophobe Membran 21, vorzugsweise direkt vor einem Anlagenaustritt 22, vorgesehen sein. Das im mechanischen Emulsionsbrecher 20 und/oder in der hydrophoben Membran 21 abgeschiedene Wasser wird dabei im Wassersammelraum 10', welcher hier exemplarisch zwischen den beiden Komponenten 20, 21 angeordnet ist, gesammelt und bei Bedarf prozessgerecht abgelassen. Dabei kann ein Wasserstand ebenfalls über einen Sensor 18' überwacht werden.

Komplettiert wird die erfindungsgemäße Vorrichtung 8 von einer Steuereinrichtung 28, welche einen vollautomatischen Betrieb, eine Überwachung der Sensoren 18, 18', eine Überwachung von Drücken, Durchflussleistung, Heizungen und Pumpen gewährleistet, wobei die Vorrichtung 8 generell sowohl manuell als auch halb- beziehungsweise vollautomatisch betrieben werden kann. Dabei sind sowohl nicht gezeigte Ventile an den Wassersammelräumen 10, 10' als auch zumindest einer der Sensoren 18, 18' kommunizierend mit der Steuereinrichtung 28 verbunden, so dass diese die Steuerung eines Wasserablasses aus wenigstens einem Wassersammelraum 10, 10' vornehmen kann. Ebenfalls der Fig. 2 zu entnehmen ist, dass stromauf des mechanischen Emulsionsbrechers 20 eine Verteilungseinrichtung 17' zur Egalisierung des Öl-Wasser-Gemisches 6 angeordnet ist.

Im Folgenden sollen die Trennschichtprofile 15 der insgesamt in drei Stufen aufeinanderfolgenden Strömungsgeneratoren des Druckentwässerungssystems 14 anhand der Fig. 3a bis 3c erläutert werden.

Gemäß Fig. 3a ist der erste Strömungsgenerator in der ersten Stufe des Druckentwässerungssystems 14 mit als Phasen-Trennelementen 15a ausgebildeten Trennprofilen 15 dargestellt. Die Phasen-Trennelemente 15a dienen dabei einerseits der Spaltung des Öl-Wasser-Gemisches 6 in Wasser 5 und Öl 4 sowie der Erzeugung einer turbulenten Strömung. Die Trennprofile15a der ersten Stufe weisen dabei eine um einen Winkel α von ca. 50 bis 60°, vorzugsweise 55°, gegen die Horizontale geneigte Anströmfläche 23 auf, welche das Öl-Wasser-Gemisch 6 nach oben umlenkt. Darüber hinaus weisen sie eine um einen Winkel β von ca. 30 bis 35°, vorzugsweise 33°, gegen die Horizontale geneigte Abströmfläche 24 auf, die das Öl-Wasser-Gemisch 6 nach unten ablenkt beziehungsweise umlenkt. Eine gesamte Länge l₁ der Trennprofile 15a in Durchströmungsrichtung 26 beträgt dabei vorzugsweise ca. 70 mm. Zwischen der Anströmfläche 23 und der Abströmfläche 24 ist eine im wesentlichen horizontal verlaufende Verbindungsfläche 25 vorgesehen, wobei sowohl die Profile 15a als auch die Profile 15b und 15c aus einem hydrophilen Material ausgebildet sind und/oder eine hydrophile Beschichtung aufweisen. Hierbei kann als hydrophiles Material und/oder als hydrophile Beschichtung insbesondere Stahl, vorzugsweise polierter Edelstahl, und/oder Kunststoff eingesetzt sein. Ein vertikaler Abstand h₁ zwischen den einzelnen Trennprofilen 15a beträgt ca. 10 bis 20 mm, vorzugsweise 14 mm. Denkbar ist hierbei, dass mehrere Trennprofile 15a in einer gemeinsamen Kassette 27 zusammengefasst sind, wobei wiederum mehrere Kassetten 27, 27' zu einem parallel durchströmbaren Querschnitt zusammensetzbar und/oder hintereinander anordenbar ausgebildet sind. In der Fig. 3a sind exemplarisch zwei Reihen mit jeweils fünf Trennprofilen 15a in Strömungsrichtung 26 hintereinander angeordnet, wobei zwischen den beiden Kassetten 27 und 27' ein Abstand d₁ von vorzugsweise 15 mm eingehalten ist. Eine Länge l₁ₐ der Verbindungsfläche 25 in Strömungsrichtung 26 liegt dabei zwischen 15 und 25 mm, vorzugsweise im Bereich von ca. 20 mm. Durch die geometrische Ausbildung und die Anordnung der Profile 15a wird ein Aufbrechen von Wassernestern erreicht, wobei sich auf den Anströmflächen 23, den Verbindungsflächen 25 und den Abströmflächen 24 ein Wasserfilm ergibt, welcher wiederum seinerseits Wasser 5 aus dem Öl-Wasser-Gemisch 6 anzieht und zur Anlagerung den entsprechenden Flächen 23, 24, 25 veranlasst.

Gemäß Fig. 3b ist der zweite Strömungsgenerator der zweiten Stufe des Druckentwässerungssystems 14 mit als Laminar-Phasen-Trennelementen 15b ausgebildeten Trennprofilen 15 dargestellt, welche zu einer Erzeugung einer laminaren Strömung und zur Abscheidung von Wasser aus dem Öl-Wasser-Gemisch 6 ausgebildet sind. Die Trennprofile 15b der zweiten Stufe weisen dabei eine um einen Winkel α' von ca. 30 bis 35°, vorzugsweise von 33°, gegen die horizontale geneigte Anströmfläche 23' auf, welche das Öl-Wasser-Gemisch 6 nach oben umlenkt und eine um einen Winkel β' von ca. 30 bis 35°, vorzugsweise von 33°, entgegengesetzt dazu geneigte Abströmfläche 24', welche das Öl-Wasser-Gemisch 6 nach unten umlenkt. Hierbei ist im Unterschied zu Fig. 3a der Winkel α' gleich groß wie der Winkel β'. Zwischen der Anströmfläche 23' und der Abströmfläche 24' ist wiederum eine im wesentlichen horizontale Verbindungsfläche 25' vorgesehen, wobei ein vertikaler Abstand h₂ zwischen den einzelnen Trennprofilen 15b der zweiten Stufe größer ist als bei den Trennprofilen 15a der ersten Stufe. Die Länge l₂ in Strömungsrichtung 26 beträgt dabei wiederum ca. 70 mm, wobei die Länge l₂ₐ der Verbindungsfläche 25' in Strömungsrichtung 26 ebenfalls ca. 20 mm beträgt. Der vertikale Abstand h₂ ist mit ca. 16 mm jedoch größer als der vertikale Abstand h₁ bei den Trennelementen 15a der ersten Stufe. Ein Abstand d₂ zwischen einzelnen Trennprofilen 15b in Strömungsrichtung 26 liegt dabei je nach verwendeter Ölsorte vorzugsweise bei ca. 30 mm. Selbstverständlich ist die Anzahl beziehungsweise die Ausrichtung der Trennprofile 15b gemäß der Fig. 3b ebenso wie der anderen Trennprofile 15a beziehungsweise 15c gemäß Fig. 3a und 3c rein exemplarisch zu verstehen, so dass auch eine andere Ausrichtung beziehungsweise Anzahl oder Anordnung von Trennprofilen 15 von der Erfindung mit umfasst sein sollen, sofern dadurch die Abtrennung von Wasser 5 aus dem Öl-Wasser-Gemisch 6 begünstigt wird.

Gemäß der Fig. 3c ist der dritte Strömungsgenerator der dritten Stufe des Druckentwässerungssystems 14 mit als mechanischen Phasenseparatoren 15c ausgebildeten Trennprofilen 15 dargestellt, welche zum koaleszierenden Abscheiden der noch verbliebenen Wasseranteile dienen. Die Abmessungen l₃ beziehungsweise h₃ beziehungsweise die Winkel α" und β" entsprechen dabei im wesentlichen denen der Trennprofile 15b aus Fig. 3b, wobei ein vertikaler Abstand h₃ zwischen den einzelnen Trennprofilen 15c der dritten Stufe kleiner ist als bei den Trennprofilen 15a der ersten Stufe. Der vertikale Abstand h₃ liegt dabei vorzugsweise in einem Bereich zwischen 5 und 10 mm, insbesondere bei ca. 8 mm. Ein Abstand d₃ in Strömungsrichtung 26 zwischen einzelnen Trennprofilen 15c liegt in einem Bereich zwischen 5 und 15 mm, vorzugsweise bei ca. 10 mm.

Insgesamt kann mit den Trennprofilen 15a bis 15c des Druckentwässerungssystems 14 ein Abscheidegrad von über 95% des im Öl-Wasser-Gemisches 6 vorhandenen Wassers 5 erreicht werden.

## Patentansprüche

1. Verfahren zur Abtrennung einer Wasserphase aus einer Ölphase eines Öl-Wasser-Gemisches (6) mit einem Druckentwässerungssystem (14) mit Mehrphasen-Trennprofilen (15), die aus einem hydrophilen material ausgebildet sind und/oder eine hydrophile beschictung aufweisen
**dadurch gekennzeichnet,**
- **dass** das Druckentwässerungssystem (14) mehrstufig, insbesondere dreistufig, arbeitet, wobei in Strömungsrichtung hintereinander gelegene Trennprofile (15) durchströmt werden, und zwar
- eine erste Stufe mit als Phasen-Trennelementen (15a) ausgebildeten Trennprofilen (15), die das Öl-Wasser-Gemisch (6) in Öl (4) und Wasser (5) aufspalten und Turbulenzen erzeugen, die ein Ablagern von Wasser (5) auf den Trennprofilen (15) begünstigen, wobei das Öl-Wasser-Gemisch (6) an den Trennprofilen (15a) zunächst durch eine um α ≈ 50 bis 60° gegen die Horizontale geneigte Anströmfläche (23) nach oben umgelenkt wird, anschließend über eine zwischen der Anströmfläche (23) und einer Abströmfläche (24) gelegene und im Wesentlichen horizontal verlaufende Verbindungsfläche (25) strömt und schließlich an den Trennprofilen (15a) durch eine um β ≈ 30 bis 35° gegen die Horizontale geneigte Abströmfläche (24) nach unten abgelenkt wird,
- eine zweite Stufe mit als Laminar-Phasen-Trennelementen (15b) ausgebildeten Trennprofilen (15), die eine laminare Strömung erzeugen und Wasser (5) aus dem Öl-Wasser-Gemisch (6) abscheiden, wobei das Öl-Wasser-Gemisch (6) an den Trennprofilen (15b) zunächst durch eine um α' ≈ 30 bis 35° gegen die Horizontale geneigte Anströmfläche (23') nach oben umgelenkt wird, anschließend über eine zwischen der Anströmfläche (23') und einer Abströmfläche (24') gelegene und im Wesentlichen horizontal verlaufende Verbindungsfläche (25') strömt und schließlich an den Trennprofilen (15b) durch eine um β' ≈ 30 bis 35° gegen die Horizontale geneigte Abströmfläche (24') nach unten abgelenkt wird,
- eine dritte Stufe mit als mechanischer PhasenSeparatoren (15c) ausgebildeten Trennprofilen (15), die verbliebene Wasseranteile (5) koaleszieren und abscheiden, wobei das Öl-Wasser-Gemisch (6) an den Trennprofilen (15c) zunächst durch eine um α" ≈ 30 bis 35° gegen die Horizontale geneigte Anströmfläche (23") nach oben umgelenkt wird, anschließend über eine zwischen der Anströmfläche (23") und einer Abströmfläche (24") gelegene und im Wesentlichen horizontal verlaufende Verbindungsfläche (25") strömt und schließlich an den Trennprofilen (15c) durch eine um β" ≈ 30 bis 35° gegen die Horizontale geneigte Abströmfläche (24") nach unten abgelenkt wird,
- **dass** im Längsschnitt gesehen zwischen den einzelnen Trennprofilen (15a) ein vertikaler Abstand (h₁) von ca. 10-20 mm vorgesehen ist,
- **dass** im Längsschnitt gesehen ein vertikaler Abstand (h₂) zwischen den einzelnen Trennprofilen (15b) des zweiten Strömungsgenerators größer ist als bei den Trennprofilen (15a) des ersten Strömungsgenerators,
- **dass** im Längsschnitt gesehen ein vertikaler Abstand (h₃) zwischen den einzelnen Trennprofilen (15c) des dritten Strömungsgenerators kleiner ist als bei den Trennprofilen (15a) des ersten Strömungsgenerators.

2. Vorrichtung umfassend zumindest ein Druckentwässerungssystem (14) mit Mehrphasen-Trennprofilen (15),
**dadurch gekennzeichnet,**
- **dass** die Mehrphasen-Trennprofile (15) aus einem hydrophilen Material ausgebildet sind und/oder eine hydrophile Beschichtung aufweisen,
- **dass** das Druckentwässerungssystem (14) mehrstufig ausgebildet ist und in Strömungsrichtung (26) hintereinander gelegen zumindest folgende Strömungsgeneratoren als Trenneinrichtungen aufweist,
- in einer ersten Stufe einen ersten Strömungsgenerator mit als Phasen-Trennelementen (15a) ausgebildeten Trennprofilen (15), die zur Spaltung eines Öl-Wasser-Gemisches (6) in Wasser (5) und Öl (4) und zur Erzeugung einer turbulenten Strömung ausgebildet sind, wobei die Trennprofile (15a) des ersten Strömungsgenerators jeweils eine nach oben um α ≈ 50 bis 60° gegen die Horizontale, geneigte Anströmfläche (23) zur Umlenkung des Öl-Wasser-Gemischs (6) nach oben aufweisen, und eine nach unten um β ≈ 30 bis 35° gegen die Horizontale, geneigte Abströmfläche (24) zur Umlenkung des Öl-Wasser-Gemischs (6) nach unten, wobei zwischen der Anströmfläche (23) und der Abströmfläche (24) eine im wesentlichen horizontale Verbindungsfläche (25) vorgesehen ist,
- in einer zweiten Stufe einen zweiten Strömungsgenerator mit als Laminar-Phasen-Trennelementen (15b) ausgebildeten Trennprofilen (15), die zur Erzeugung einer laminaren Strömung und zur Abscheidung von Wasser (5) aus dem Öl-Wasser-Gemisch (6) ausgebildet sind, wobei die Trennprofile (15b) des zweiten Strömungsgenerators eine nach oben um α' ≈ 30 bis 35° gegen die Horizontale, geneigte Anströmfläche (23') zur Umlenkung des Öl-Wasser-Gemischs (6) nach oben aufweisen und eine nach unten um β' ≈ 30 bis 35°, geneigte Abströmfläche (24') zur Umlenkung des Öl-Wasser-Gemischs (6) nach unten, wobei zwischen der Anströmfläche (23') und der Abströmfläche (24') eine im wesentlichen horizontale Verbindungsfläche (25') vorgesehen ist,
- in einer dritten Stufe einen dritten Strömungsgenerator mit als mechanischen Phasen-Separatoren (15c) ausgebildeten Trennprofilen (15), die zum Koaleszieren und Abscheiden verbliebener Wasseranteile (5) ausgebildet sind, wobei die Trennprofile (15c) des dritten Strömungsgenerators eine nach oben um α" ≈ 30 bis 35° gegen die Horizontale, geneigte Anströmfläche (23") zur Umlenkung des Öl-Wasser-Gemischs (6) nach oben aufweisen und eine nach unten um β" ≈ 30 bis 35°, geneigte Abströmfläche (24") zur Umlenkung des Öl-Wasser-Gemischs (6) nach unten, und zwischen der Anströmfläche (23") und der Abströmfläche (24") eine im wesentlichen horizontale Verbindungsfläche (25") vorgesehen ist,
- wobei im Längsschnitt gesehen zwischen den einzelnen Trennprofilen (15a) ein vertikaler Abstand (h₁) von ca. 10-20 mm vorgesehen ist,
- wobei im Längsschnitt gesehen ein vertikaler Abstand (h₂) zwischen den einzelnen Trennprofilen (15b) des zweiten Strömungsgenerators größer ist als bei den Trennprofilen (15a) des ersten Strömungsgenerators,
- wobei im Längsschnitt gesehen ein vertikaler Abstand (h₃) zwischen den einzelnen Trennprofilen (15c) des dritten Strömungsgenerators kleiner ist als bei den Trennprofilen (15a) des ersten Strömungsgenerators.

3. Vorrichtung nach Anspruch 2,
**dadurch gekennzeichnet,**
**dass** als hydrophiles Material und/oder als hydrophile Beschichtung Stahl, insbesondere polierter Edelstahl, und/oder Kunststoff eingesetzt ist.

4. Vorrichtung nach Anspruch 2 oder 3,
**dadurch gekennzeichnet,**
**dass** mehrere Trennprofile (15) in einer gemeinsamen Kassette (27) zusammengefasst sind, wobei mehrere Kassetten (27) zu einem parallel durchströmbaren Querschnitt zusammensetzbar und/oder hintereinander anordenbar ausgebildet sind.

5. Vorrichtung nach einem der Ansprüche 2 bis 4,
**dadurch gekennzeichnet,**
- **dass** ein mechanischer Emulsionsbrecher (20) vorgesehen ist, welcher stromab der Trennprofile (15) angeordnet ist, und/oder
- **dass** eine hydrophobe Membran (21) vorgesehen ist, welche stromab der Trennprofile (15) angeordnet ist.

6. Vorrichtung nach Anspruch 5,
**dadurch gekennzeichnet,**
**dass** zumindest zwischen dem Druckentwässerungssystem (14) und dem mechanischen Emulsionsbrecher (20) und/oder zwischen dem mechanischen Emulsionsbrecher (20) und der hydrophoben Membran (21) ein Sensor (18, 18') vorgesehen ist, welcher zur Detektion eines Wasseranteils ausgebildet ist.

7. Vorrichtung nach Anspruch 6,
**dadurch gekennzeichnet,**
**dass** der zumindest eine Sensor (18, 18') kommunizierend mit einer Steuereinrichtung (28) verbunden ist, die zumindest zur Steuerung eines Wasserablasses aus wenigstens einem Wassersammelraum (10, 10') und zur Steuerung eines Durchflusses durch die Vorrichtung (8) ausgebildet ist.

8. Vorrichtung nach einem der Ansprüche 5 bis 7,
**dadurch gekennzeichnet,**
**dass** stromauf des Druckentwässerungssystems (14) und/oder stromauf des mechanischen Emulsionsbrechers (20) und/oder stromauf der hydrophoben Membran (21) jeweils eine Verteilungseinrichtung (17, 17') zur Egalisierung des Öl-Wasser-Gemisches (6) angeordnet ist.

9. Verwendung einer Vorrichtung (8) nach einem der Ansprüche 2 bis 8 zur Durchführung des Verfahrens nach Anspruch 1.

## Claims

1. A method for separating a water phase from an oil phase of an oil-water mixture (6) with a pressurized dewatering system (14) having multi-phase separation profiles (15) which are formed from a hydrophilic material and/or have a hydrophilic coating,
**characterized in**
- **that** the pressurized dewatering system (14) operates in multiple stages, in particular in three stages, wherein a flow passes in the flow direction through successively arranged separation profiles (15), namely
- a first stage with separation profiles (15) which are configured as phase separating elements (15a) which split the oil-water mixture (6) into oil and water (4), (5) and generate turbulences which promote settling of water (5) on the separation profiles (15), wherein the oil-water mixture (6) is first deflected upward at the separation profiles (15a) by a flow-against surface (23) inclined at an angle a ≈ 50° to 60° with respect to a horizontal, subsequently flows over a connecting surface (25) which is located between the flow-against surface (23) and a flow-off surface (24) and runs substantially horizontally, and is finally deflected downward at the separation profiles (15a) by a flow-off surface (24) inclined at an angle β ≈ 30 to 35° with respect to the horizontal,
- a second stage with separation profiles (15) which are configured as laminar-phase separation elements (15b) which generate a laminar flow and separate water (5) from the oil-water mixture (6), wherein the oil-water mixture (6) is first deflected upward at the separation profiles (15b) by a flow-against surface (23') inclined at an angle α' ≈ 30° to 35° with respect to a horizontal, subsequently flows over a connecting surface (25') which is located between the flow-against surface (23') and a flow-off surface (24') and runs substantially horizontally, and is finally deflected downward at the separation profiles (15b) by a flow-off surface (24') inclined at an angle β' ≈ 30 to 35° with respect to the horizontal,
- a third stage with separation profiles (15) configured as mechanical phase separators (15c) which coalesce and separate remaining water portions (5), wherein the oil-water mixture (6) is first deflected upward at the separation profiles (15c) by a flow-against surface (23") inclined at an angle α" ≈ 30° to 35° with respect to a horizontal, subsequently flows over a connecting surface (25") which is located between the flow-against surface (23") and a flow-off surface (24") and runs substantially horizontally, and is finally deflected downward at the separation profiles (15c) by a flow-off surface (24") inclined at an angle β ≈ 30 to 35° with respect to the horizontal,
- **that** viewed in the longitudinal section, a vertical distance (h₁) of approx. 10 - 20 mm is provided between the individual separation profiles (15a),
- **that** viewed in the longitudinal section, a vertical distance (h₂) between the individual separation profiles (15b) of the second flow generator is greater than that of the separation profiles (15a) of the first flow generator,
- **that** viewed in the longitudinal section, a vertical distance (h₃) between the individual separation profiles (15c) of the third flow generator is smaller than that of the separation profiles (15a) of the first flow generator.

2. A device comprising at least one pressurized dewatering system (14) with multi-phase separation profiles (15),
**characterized in**
- **that** the multi-phase separation profiles (15) are made from a hydrophilic material and/or have a hydrophilic coating,
- **that** the pressurized dewatering system (14) is configured to have multiple stages and has at least the following flow generators serving as separators and positioned successively in the flow direction (26),
- in a first stage, a first flow generator with separation profiles (15) configured as phase separation elements (15a) which are configured for separating an oil-water mixture (6) into water (5) and oil (4) and for generating a turbulent flow, wherein the separation profiles (15a) of the first flow generator have in each case a flow-against surface (23) inclined upward at an angle α ≈ 50 to 60° with respect to the horizontal for deflecting the oil-water mixture (6) upward, and a flow-off surface (24) inclined downward at an angle β ≈ 30 to 35° with respect to the horizontal for deflecting the oil-water mixture (6) downward, wherein a substantially horizontal connecting surface (25) is provided between the flow-against surface (23) and the flow-off surface (24),
- in a second stage, a second flow generator with separation profiles (15) configured as laminar-phase separation elements (15b) which are configured for generating a laminar flow and for separating water (5) from the oil-water mixture (6), wherein the separation profiles (15b) of the second flow generator have a flow-against surface (23') inclined upward at an angle α' ≈ 30 to 35° with respect to the horizontal for deflecting the oil-water mixture (6) upward, and a flow-off surface (24') inclined downward at an angle β' ≈ 30 to 35° with respect to the horizontal for deflecting the oil-water mixture (6) downward, wherein a substantially horizontal connecting surface (25') is provided between the flow-against surface (23') and the flow-off surface (24'),
- in a third stage, a third flow generator with separation profiles (15) configured as mechanical phase separators (15c) which are configured for coalescing and separating remaining water portions (5), wherein the separation profiles (15c) of the third flow generator have a flow-against surface (23") inclined upward at an angle α" ≈ 30 to 35° with respect to the horizontal for deflecting the oil-water mixture (6) upward, and a flow-off surface (24") inclined downward at an angle β" ≈ 30 to 35° with respect to the horizontal for deflecting the oil-water mixture (6) downward, and a substantially horizontal connecting surface (25") is provided between the flow-against surface (23") and the flow-off surface (24")
- wherein viewed in the longitudinal section, a vertical distance (h₁) of approx. 10 - 20 mm is provided between the individual separation profiles (15a),
- wherein viewed in the longitudinal section, a vertical distance (h₂) between the individual separation profiles (15b) of the second flow generator is greater than that of the separation profiles (15a) of the first flow generator,
- wherein viewed in the longitudinal section, a vertical distance (h₃) between the individual separation profiles (15c) of the third flow generator is smaller than that of the separation profiles (15a) of the first flow generator.

3. The device according to claim 2,
**characterized in**
**that** as a hydrophilic material and/or as hydrophilic coating, in particular polished stainless steel and/or plastic is used.

4. The device according to claim 2 or claim 3,
**characterized in**
**that** a plurality of separation profiles (15) are combined in a common cassette (27), wherein a plurality of cassettes (27) are configured such that they can be assembled to form a cross-section through which a parallel flow can pass, and/or they can be arranged successively.

5. The device according to any one of the claims 2 to 4,
**characterized in**
- **that** a mechanical emulsion breaker (20) is provided which is arranged downstream of the separation profiles (15), and/or
- **that** a hydrophobic membrane (21) is provided which is arranged downstream of the separation profiles (15).

6. The device according to claim 5,
**characterized in**
**that** at least between the pressurized dewatering system (14) and the mechanical emulsion breaker (20) and/or between the mechanical emulsion breaker (20) and the hydrophobic membrane (21), a sensor (18, 18') is provided which is configured for detecting a water portion.

7. The device according to claim 6,
**characterized in**
**that** the at least one sensor (18, 18') is connected in a communicating manner to a control unit (28) which is configured at least for controlling water drainage from at least one water collecting chamber (10, 10') and for controlling a flow rate through said device (8).

8. The device according to any one of the claims 5 to 7,
**characterized in**
**that** upstream of the pressurized dewatering system (14), and/or upstream of the mechanical emulsion breaker (20), and/or upstream of the hydrophobic membrane (21), in each case one distribution unit (17, 17') is arranged for leveling the oil-water mixture (6).

9. A use of a device (8) according to any one of the claims 2 to 8 for carrying out the method according to claim 1.

## Revendications

1. Procédé de séparation d'une phase aqueuse d'une phase huileuse d'un mélange huile-eau (6) avec un système de drainage sous pression (14) comportant des profilés séparateurs polyphasés (15), qui sont conçus dans un matériau hydrophile et/ou présentent un revêtement hydrophile, **caractérisé en ce que**
- le système de drainage sous pression (14) fonctionne en plusieurs étages, notamment en trois étages, dans lequel des profilés séparateurs (15) placés les uns derrière les autres dans la direction d'écoulement sont traversés par un écoulement, et notamment
- un premier étage avec des profilés séparateurs (15) conçus comme des éléments séparateurs de phase (15a), qui séparent le mélange huile-eau (6) en huile (4) et eau (5) et génèrent des turbulences, qui favorisent un dépôt d'eau (5) sur les profilés séparateurs (15), dans lequel le mélange huile-eau (6) est ensuite dévié vers le haut sur les profilés séparateurs (15a) par une surface d'entrée d'écoulement (23) inclinée de α ≈ 50 à 60° par rapport à l'horizontale, puis s'écoule à travers une surface de liaison (25) placée entre la surface d'entrée d'écoulement (23) et une surface de sortie d'écoulement (24) et s'étendant essentiellement à l'horizontale et enfin est déviée vers le bas sur les profilés séparateurs (15a) à travers une surface de sortie d'écoulement (24) inclinée de β≈ 30 à 35° par rapport à l'horizontale,
- un deuxième étage avec des profilés séparateurs (15) conçus comme des éléments de séparation de phases laminaires (15b), qui génèrent un écoulement laminaire et séparent l'eau (5) du mélange huile-eau (6), dans lequel le mélange huile-eau (6) est ensuite dévié vers le haut sur les profilés séparateurs (15b) à travers une surface d'entrée d'écoulement (23') inclinée de α' ≈ 30 à 35° par rapport à l'horizontale, puis s'écoule à travers une surface de liaison (25') s'étendant essentiellement à l'horizontale et placée entre la surface d'entrée d'écoulement (23') et une surface de sortie d'écoulement (24') et enfin est déviée vers le bas sur les profilés séparateurs (15b) à travers une surface de sortie d'écoulement (24') inclinée de β' ≈ 30 à 35° par rapport à l'horizontale,
- un troisième étage avec des profilés séparateurs (15) conçus comme des séparateurs de phase mécaniques (15c), qui coalescent et séparent les fractions d'eau (5) restantes, dans lequel le mélange huile-eau (6) est d'abord dévié vers le haut sur les profilés séparateurs (15c) à travers une surface d'entrée d'écoulement (23") de α" ≈ 30 à 35° par rapport à l'horizontale, puis s'écoule à travers une surface de liaison (25") s'étendant essentiellement à l'horizontale et placée entre la surface d'entrée d'écoulement (23") et une surface de sortie d'écoulement (24") et enfin est dévié vers le bas sur les profilés séparateurs (15c) par une surface de sortie d'écoulement (24") inclinée de β" ≈ 30 à 35° par rapport à l'horizontale,
- vu en coupe longitudinale, un espacement vertical (h₁) d'environ 10-20 mm est prévu entre les profilés séparateurs (15a) individuels,
- vu en coupe longitudinale, un espacement vertical (h₂) entre les profilés séparateurs (15b) individuels du deuxième générateur d'écoulement est plus grand que dans le cas des profilés séparateurs (15a) du premier générateur d'écoulement,
- vu en coupe longitudinale, un espacement vertical (h₃) entre les profilés séparateurs (15c) individuels du troisième générateur d'écoulement est plus petit que dans le cas des profilés séparateurs (15a) du premier générateur d'écoulement.

2. Dispositif comprenant au moins un système de drainage sous pression (14) avec des profilés séparateurs polyphasés (15), **caractérisé en ce que**
- les profilés séparateurs polyphasés (15) sont conçus dans un matériau hydrophile et/ou présentent un revêtement hydrophile,
- le système de drainage sous pression (14) est conçu en plusieurs étages et présente des générateurs d'écoulement (26) successifs placés au moins les uns derrière les autres en tant que dispositifs de séparation,
- dans un premier étage un premier générateur d'écoulement comportant des profilés séparateurs (15) conçus comme des éléments séparateurs de phase (15a), qui sont conçus afin de séparer un mélange huile-eau (6) en eau (5)à et huile (4) et afin de générer un écoulement turbulent, dans lequel les profilés séparateurs (15a) du premier générateur d'écoulement présentent respectivement une surface d'entrée d'écoulement (23) inclinée vers le haut de α≈ 50 à 60° par rapport à l'horizontale pour dévier le mélange huile-eau (6) vers le haut, et une surface de sortie d'écoulement (24) inclinée vers le bas de β≈ 30 à 35° par rapport à l'horizontale pour dévier le mélange huile-eau (6) vers le bas, dans lequel entre la surface d'entrée d'écoulement (23) et la surface de sortie d'écoulement (24) une surface de liaison (25) essentiellement horizontale est prévue,
- dans un deuxième étage un deuxième générateur d'écoulement comportant des profilés séparateurs (15) conçus comme des éléments séparateurs de phases laminaires (15b), qui sont conçus afin de générer un écoulement laminaire et afin de séparer l'eau (5) du mélange huile-eau (6) sont conçus, dans lequel les profilés séparateurs (15b) du deuxième générateur d'écoulement présentent une surface d'entrée d'écoulement (23') inclinée vers le haut de α'≈ 30 à 35° par rapport à l'horizontale pour dévier le mélange huile-eau (6) vers le haut et une surface de sortie d'écoulement (24') inclinée vers le bas de β'≈ 30 à 35° pour dévier le mélange huile-eau (6) vers le bas, dans lequel entre la surface d'entrée d'écoulement (23') et la surface de sortie d'écoulement (24') une surface de liaison (25') essentiellement horizontale est prévue,
- dans un troisième étage un troisième générateur d'écoulement comportant des profilés séparateurs (15) conçus comme des séparateurs de phase mécaniques (15c), qui sont conçus afin de coalescer et séparer les fractions d'eau restantes (5), dans lequel les profilés séparateurs (15c) du troisième générateur d'écoulement présentent une surface d'entrée d'écoulement (23") inclinée vers le haut de α"≈ 30 à 35° par rapport à l'horizontale pour dévier le mélange huile-eau (6) vers le haut et une surface de sortie d'écoulement (24") inclinée vers le bas de β"≈ 30 à 35° pour dévier le mélange huile-eau (6) vers le bas, et entre la surface d'entrée d'écoulement (23") et la surface de sortie d'écoulement (24") une surface de liaison (25") essentiellement horizontale est prévue,
- dans lequel vu en coupe longitudinale, un espacement vertical (h₁) d'environ 10-20 mm est prévu entre les profilés séparateurs (15a) individuels,
- dans lequel vu en coupe longitudinale, un espacement vertical (h₂) entre les profilés séparateurs (15b) individuels du deuxième générateur d'écoulement est plus grand que dans le cas des profilés séparateurs (15a) du premier générateur d'écoulement,
- dans lequel vu en coupe longitudinale, un espacement vertical (h₃) entre les profilés séparateurs (15c) individuels du troisième générateur d'écoulement est plus petit que dans le cas des profilés séparateurs (15a) du premier générateur d'écoulement.

3. Dispositif selon la revendication 2,
**caractérisé en ce que**
comme matériau hydrophile et/ou comme revêtement hydrophile, de l'acier, notamment de l'acier inoxydable poli et/ou du plastique est employé.

4. Dispositif selon les revendications 2 ou 3,
**caractérisé en ce que**
plusieurs profilés séparateurs (15) sont regroupés dans une cassette (27) commune, dans lequel plusieurs cassettes (27) sont conçues de manière à pouvoir être assemblées en une section transversale traversée par un écoulement parallèle et/ou de manière à pouvoir être disposées les unes derrière les autres.

5. Dispositif selon une des revendications 2 à 4,
**caractérisé en ce que**
- un désémulsifiant mécanique (20) est prévu, qui est disposé en aval des profilés séparateurs (15), et/ou
- une membrane hydrophobe (21) est prévue, qui est disposée en aval des profilés séparateurs (15).

6. Dispositif selon la revendication 5,
**caractérisé en ce que**
au moins entre le système de drainage sous pression (14) et le désémulsifiant mécanique (20) et/ou entre le désémulsifiant mécanique (20) et la membrane hydrophobe (21), un capteur (18, 18') est prévu, qui est conçu afin de détecter une fraction d'eau.

7. Dispositif selon la revendication 6,
**caractérisé en ce que**
au moins un capteur (18, 18') est relié de manière communicante avec un dispositif de commande (28), qui est conçu au moins afin de commander une évacuation d'eau hors d'au moins un espace d'accumulation d'eau (10, 10') et afin de commander un débit à travers le dispositif (8).

8. Dispositif selon une des revendications 5 à 7,
**caractérisé en ce que**
en amont du système de drainage d'eau (14) et/ou en amont du désémulsifiant mécanique (20) et/ou en amont de la membrane hydrophobe (21) respectivement un dispositif de distribution (17, 17') est disposé afin d'égaliser le mélange huile-eau (6).

9. Utilisation d'un dispositif (8) selon une des revendications 2 à 8 pour mettre en oeuvre le procédé selon la revendication 1.
